# EUROPEAN PATENT APPLICATION

(11) **EP 4 488 403 A1**
(43) Date of publication of application: **08.01.2025**
(21) Application number: 22929502.7
(22) Date of filing: 15.07.2022
(51) Int. Cl.: C22C 38/04, C22C 38/02, C22C 38/42, C22C 38/44, C22C 38/48, C22C 38/50, C22C 38/46, C22C 33/06, C21C 7/06, C21C 7/10, C22C 38/06, C21D 1/30, C21D 6/00, C21D 8/02, B22D 11/00

(54) **CARBURIZED BEARING STEEL FOR LARGE-LOAD ROLLING MILL BEARING AND PRODUCTION METHOD THEREFOR**

(30) Priority: 02.03.2022 CN 202210197642
(71) Applicant: Jiangyin Xingcheng Special Steel Works Co., Ltd, Jiangyin, Jiangsu 214434 (CN)
(72) Inventor: CHEN, Min, Jiangyin, Jiangsu 214434 (CN); BAI, Yun, Jiangyin, Jiangsu 214434 (CN); YIN, Qing, Jiangyin, Jiangsu 214434 (CN); WU, Xiaolin, Jiangyin, Jiangsu 214434 (CN); LI, Wenbin, Jiangyin, Jiangsu 214434 (CN); LIU, Ye, Jiangyin, Jiangsu 214434 (CN); HUA, Liukai, Jiangyin, Jiangsu 214434 (CN)
(74) Representative: Huang, Liwei
(86) International application number: PCT/CN2022/105844
(87) International publication number: WO 2023/165068

(57) **Abstract**

The present invention relates to a carburized bearing steel for large-load rolling mill bearings and a production method thereof, wherein the chemical composition by mass percentage is: 0.17-0.23, Si: 0.15-0.40, Mn: 0.30-0.60, Cr: 1.25-1.75, Mo: ≤0.08, Ni: 3.25-3.75, Al: 0.01-0.05, P≤0.020, S≤0.015, Cu≤0.20, Nb: 0.05-0.09, V: 0.07-0.13, Ca≤0.0010, Ti≤0.0015, O≤0.0008, and the balance is Fe and unavoidable impurities. The metallographic structure of the steel is bainite, and the grain size G is ≥ 5. The present invention uses a production method inlcuding large-section continuous casting CCM to produce large continuous casting bloom - slow cooling - heating and rolling into intermediate bloom - slow cooling - heating and rolling into a product - slow cooling, annealing - finishing. The bainite structure of the steel in this application is finer and more uniform than that of electroslag steel, and the production cost is lower, which significantly improves the market competitiveness of this steel type.

## Description

### Technical field

The present invention relates to the field of iron and steel metallurgy, and in particular to a carburized bearing steel and a production method thereof.

### Background Art

Rolling mill bearings are important parts of steel rolling machinery. Their quality and service life are directly related to the production efficiency, product quality and production cost of the rolling mill. At present, rolling mills are developing towards heavy load, high speed and high efficiency. This has brought a revolution to the design, manufacture, use, maintenance and inspection of rolling mill bearings, and also put forward higher requirements to rolling mill bearing materials. Compared with ordinary bearings, the working conditions of bearings used in steel rolling machinery are more worse, especially for rolling mill bearings with large loads, which need to withstand greater impact forces during use. The materials used to manufacture such bearings must have sufficient impact resistance, besides the requirements of high strength, high hardness and high wear resistance.

At present, most of the rolling mill bearings used in China are made of traditional high-carbon chromium bearing steel GCr15 or GCr15SiMn. This is a typical steel type of bearing steel, with good performance and good process performance as well as low price. At the same time, its smelting process and heat treatment and other processing technologies are relatively mature, and it is the preferred steel type for manufacturing ordinary bearing rings and rolling elements. However, there are also some problems when high-carbon chromium bearing steel treated by traditional martensitic quenching and tempering is used in the production of rolling mill bearings. For example, high-carbon chromium bearing steel is a hypereutectoid steel with a carbon content of up to 0.95-1.05%, which makes the metallographic structure of the final steel very brittle and the fracture toughness is usually low; at the same time, during the heat treatment and hot processing, the steel surface is easy to oxidize and decarburize, and after quenching, the surface may have a residual tensile stress state, which is very easy to produce surface cracks in subsequent processing or use; in addition, the impact load that rolling mill bearings bear during use is quite large, which can easily cause the expansion and cracking of surface cracks, resulting in early failure of bearings. It affects the normal operation of the rolling mill. Besides, because the rolling mill bearing rings have large dimensions, heavy weight, and thick walls, the hardenability of GCr15 or GCr15SiMn bearing steel is limited, and the quality of heat treatment is not easy to meet the standard requirements, which brings great difficulties in the production of rolling mill bearings.

Using of carburized bearing steel is another way to improve the impact resistance and service life of rolling mill bearings. The bearings of large rolling mills are generally large in size. They work under extremely high contact stress and are frequently subjected to impact and wear. Therefore, in addition to the requirements for general bearings, the use of these large-size bearings also requires that the core part has sufficient toughness and higher compressive strength and higher hardness, so it can be manufactured by using carburized bearing steel. Among them, carburized steel G20Cr2Ni4 has high hardness, good wear resistance and contact fatigue strength on the surface after carburizing quenching and low-temperature tempering, while the core has low carbon content and good toughness, which can withstand the impact of large loads. It is very suitable for manufacturing large-size rolling mill bearings. Compared with high carbon chromium bearing steel, carburized bearing steel has a long service life and good impact resistance, and can be used to prepare large-load rolling mill bearings.

At present, the national standard GB/T 3203 for carburized bearing steel clearly stipulates that the electroslag remelting process must be used for the production of high-level carburized steel G20Cr2Ni4A. Since the steel produced by the electroslag remelting process has many quality advantages such as fine non-metallic inclusions, uniform inclusion distribution, more uniform and denser structure, its quality stability is always good. However, the electroslag remelting process also has obvious disadvantages such as very low production efficiency and capacity, very high energy consumption and very high production costs. Therefore, the market competitiveness of this steel type produced by electroslag remelting is very low. Compared with the electroslag remelting process, the vacuum degassing plus continuous casting process can greatly improve production efficiency and capacity, significantly reduce energy consumption and production costs, and thus has more competitive advantages.

### Content of the invention

Considering the above-mentioned prior art, The present invention provides a carburized bearing steel for large-load rolling mill bearings, which is produced by a continuous casting method. This carburized bearing steel has strong market competitiveness, on the basis of meeting the quality requirements of carburized bearing steel for large-load rolling mill bearings.

On the basis of the technical standard requirements of high-level high-quality steel G20Cr2Ni4A specified in the existing national standard GB/T 3203, the present application firstly tunes and optimizes the chemical composition, and secondly adopts a high-efficiency, high-capacity, low-cost process production route, including vacuum degassing, continuous casting and rolling, and optimizes the forming process. By improving the purity of the steel and adopting a special rolling process to improve the steel structure, the steel structure can achieve high purity, high structural uniformity and density, thereby meeting the use requirements of large-load rolling mill bearings and replacing the electroslag remelting production process which was needed by this steel type.

The technical solution adopted by the present invention is as follows: according to the present invention, the chemical composition of the carburized bearing steel for large-load rolling mill bearings is by mass percentage, C: 0.17-0.23, Si: 0.15-0.40, Mn: 0.30-0.60, Cr: 1.25-1.75, Mo: ≤0.08, Ni: 3.25-3.75, Al: 0.01-0.05, P≤0.020, S≤0.015, Cu≤0.20, Nb: 0.05-0.09, V: 0.07-0.13, Ca≤0.0010, Ti≤0.0015, O≤0.0008, and the balance is Fe and unavoidable impurities.

The main elements C, Si, Mn, Cr, Ni, Mo, Al, and Ni all fall within the range of G20Cr2Ni4 as specified in the current national standard GB/T 3203-2016 for carburized bearing steel, nevertheless, V and Nb elements are added additionally. Nb (niobium) is added because niobium has extremely strong binding force with carbon, nitrogen and oxygen, and forms extremely stable corresponding compounds with them, so it can refine the grains, reduce the overheating sensitivity and tempering brittleness of steel, and at the same time improve the steel's strength at high temperatures, and increase the service life of rolling mill bearings when running at high temperatures. V (vanadium) is added. Vanadium can improve the strength and toughness of steel, and the carbide formed by vanadium and carbon can improve the corrosion resistance of steel in high-temperature / high-pressure working environment. For rolling mill bearings that work under high temperature, under heavy load and in harsh operating environment, the service life can be increased. In addition, since the vacuum degassing + continuous casting process is adopted in the present invention, the harmful elements O and N can be significantly reduced when compared with the electroslag remelting process. Therefore, compared with the provisions of GB/T 3203-2016, O can be controlled at ≤0.0008% and Ti can be controlled at ≤0.0015%.

In the present invention, the main inspection items and indexes are determined as follows:

The present invention puts forward strict requirements on both microscopic inclusions and macroscopic inclusions. Microscopic inclusions include type-A plastic inclusions, type-C plastic inclusions, type-B brittle inclusions, and type-D brittle inclusions. Brittle inclusions are hard particles in steel, which produce stress concentration when the bearing is running. At the same time, they are easy to separate from the matrix and produce cracks when the steel deforms, which further aggravates the stress concentration and easily causes cracking. The larger the inclusion particles and/or the longer the length, the greater the harm. Plastic inclusions are soft particles in steel, which are not easy to separate from the matrix when the steel deforms, so the harm is relatively small.

The qualified carburized bearing steel produced by the present invention has fine brittle microscopic inclusions, satisfying: Type B fine inclusions ≤ Grade 1.5, Type B coarse inclusions ≤ Grade 1.0, Type D fine inclusions ≤ Grade 1.0, Type D coarse inclusions ≤ Grade 1.0, Type DS inclusions ≤ Grade 1.0. The specific requirements are shown in the following Table 1. Meanwhile, macroscopic inclusions significantly reduce the wear resistance of the steel, causing serious stress concentration and easily causing early failure of the bearing during use. The macroscopic defects of the present invention are tested by using an etching test of tower sample (immersing in acid to find hairlines), and no hairline is detected.

**Table 1**

| | | | | | | | | | |
|---|---|---|---|---|---|---|---|---|---|
| Type | A | | B | | C | | D | | DS |
| | Fine | Thick | Fine | Thick | Fine | Thick | Fine | Thick | 1.0 |
| Grade | 1.5 | 1.0 | 1.5 | 1.0 | 0 | 0 | 1.0 | 1.0 | |

The uniformity and density of the structure of steel under low magnification have an impact on the life of the bearing. GB/T 1979 is used to grade the structure of steel under low magnification. It meets the following requirements: central porosity ≤ Grade 1.0, general porosity ≤ Grade 1.0, ingot segregation ≤ Grade 1.0, central segregation ≤ Grade 1.0, besides, it is not allowed to have shrinkage cavities, cracks or subcutaneous bubbles.

In order to ensure the strength, toughness and impact resistance of the steel, the metallographic structure of the carburized bearing steel of the present invention has a uniform and fine bainite structure, and the grain size G is required to be ≥ 5 . At the same time, the tensile strength is required to be ≥ 1180 MPa, the impact performance AKU is required to be ≥ 63 J, the elongation after fracture is ≥10%, and the section shrinkage is ≥45%. In order to ensure the cold processing performance of the steel, the hardness is required to be ≤ 241 HBW, and the decarburization is required to be ≤ 0.8% D (D is the diameter).

In the present application, another object is to provide a method for producing carburized bearing steel for large-load rolling mill bearings, which uses continuous casting instead of electroslag remelting to produce the bloom. It mainly includes following steps:
(1) smelting of molten steel;
(2) using continuous casting process to cast molten steel into continuous casting bloom, preferably, the size of the continuous casting bloom is greater than 300mm×400mm, ensuring that the compression ratio of the steel is greater than 4;
(3) slow cooling of continuous casting bloom: slow cooling of continuous casting bloom is to slowly cool the continuous casting bloom in a pit, wherein the temperature of entering the pit is greater than 650 °C, the time of slow cooling in the pit is greater than 48 hours, and the temperature of leaving the pit is less than 300 °C;
(4) rolling into intermediate bloom: after slow cooling, the continuous casting bloom is heated to 1210°C-1260°C in a heating furnace, preferably in a neutral or weakly oxidizing atmosphere, wherein the holding time of the heating is ≥ 10 h, so as to allow the steel to fully diffuse at high temperature. After high-temperature diffusion and before rolling, the continuous casting bloom is descaled by high-pressure water. The descaling can remove the iron oxide scales on the surface of the continuous casting bloom, and meanwhile quickly reduce the surface temperature of the continuous casting bloom. According to calculations and studies, when the surface temperature of the bloom is 100-200°C lower than the core temperature by descaling and cooling, the deformation and recrystallization first happen at the core of the bloom during the deformation process, which can significantly solve the problem of core porosity and core segregation in a continuous casting bloom with large cross-section. After the descaling by high-pressure water, rolling is carried out, and the starting rolling temperature is controlled at 1020-1100°C (the surface temperature of the continuous casting bloom). At this time, the core temperature of the continuous casting bloom is 1180-1250°C. It performs rolling at non-uniform temperatures, so as to control the quality at the core of the steel.

In an initial rolling process, it is preferred to use a reciprocating two-roll rough rolling mill to perform multiple-pass rolling of the continuous casting bloom, in which a small-reduction rolling (deformation ≤ 10%) and a large-reduction rolling (deformation ≥ 15%) are performed alternately.

Through the large-reduction rolling in the initial rolling process, the rolling penetration force is transmitted from the surface of the steel bloom to the core of the steel bloom, thereby improving the segregation in the core of the steel. Besides, by controlling that a wide face and a narrow face of the continuous casting bloom have different rolling reductions, and for the rolling passes, each of the wide face and the narrow face is preferably subjected to at least one large-reduction rolling pass and at least one small-reduction rolling pass, it can improve the isotropy in the mechanical properties of the steel and satisfy the customer's requirements in use.

For a square continuous casting bloom, it has four faces. Taking the initial rolling with a total of 7 passes as an example, a specific process may be as follows: In the first pass, the wide face of the continuous casting bloom is pressed down by a deformation of about 9.7% ; the bloom is turned 90°; in the second pass, pressed down by a deformation of about 15.4%; in the third pass, pressed down by a deformation of about 3.6%; then the bloom is turned 90° again; in the fourth pass, pressed down by a deformation of about 23%; in the fifth pass, pressed down by a deformation of about 5%; and then the bloom is turned 90° again, in the sixth pass, pressed down by a deformation of about 18.8%; in the seventh pass, pressed down by a deformation of about 4.3%, and finally an intermediate bloom of 200mm×200mm is formed; 200 mm is cut off at each of both ends of the intermediate bloom. Through this rolling process, the rolling penetration force of the rough rolling process is transmitted from the bloom surface to the bloom core, thereby reducing the core segregation of the steel.

By the production technology, wherein in the production process, casting of blooms with large cross-section is combined with non-uniform temperature rolling, and is combined with a large reduction in initial rolling, it can significantly refine and homogenize the matrix structure in steel.

(5) slowly cooling the intermediate bloom, and rolling into a product. The intermediate bloom needs to be slowly cooled, preferably in the pit, with the temperature of entering the pit ≥600°C, the temperature of leaving the pit ≤300°C, and the time of slow cooling ≥60h. Within 24 hours after the slow cooling, the intermediate bloom is sent to a heating furnace again, to be heated to 1200°C-1250°C, the holding time ≥3h, the start rolling temperature is 1050°C-1130°C, the final rolling temperature is ≥950°C, finally it is rolled into a round steel of a target size, whose final product has a specification of ϕ50mm-Φ130mm.

(6) slowly cooling the rolled product and annealing. The rolled bar is slowly cooled again, preferably in the pit for slow cooling. The temperature of entering the pit is required to be ≥450°C, the temperature of leaving the pit is ≤200°C, and the time is ≥48 hours. Within 24 hours after leaving the pit, the bar is subjected to stress relief annealing; the temperature of stress relief annealing is 650-750°C, the holding time is ≥5h, and then the bar is cooled to 400°C in the furnace, and then taken out of the furnace, and cooled in air to room temperature.

(7) Finishing. The steel is subjected to finishing process(es) such as straightening and flaw detection. All products undergo 100% non-destructive testing, and only those that pass the test are qualified products.

In step (1), the raw materials in smelting are sequentially subjected to KR pretreatment of molten iron, electric furnace or converter smelting, LF refining, RH or VD vacuum degassing, so as to obtain pure molten steel that meets the chemical composition. For steel tapping of the electric furnace or converter, the end-point carbon carbon is controlled at 0.08-0.15%, end-point phosphorus content is controlled at ≤0.20%, and the tapping temperature is between 1620-1700°C. Iron containing Al is added during the tapping process for pre-deoxidation. After tapping, slag is removed and a synthetic slag is added again.

In LF refining, it performs heating, alloying and deoxidation, so as to control the aluminum content in the range of from 0.02% to 0.04%. The deoxidation uses a diffusion deoxidation on slag surface. The alloy is added in the early stage of refining. The whole time of LF smelting is ≥1 hour. Stirring with argon is performed throughout the whole process of vacuum degassing, and the vacuum is maintained at/under 100Pa for ≥20 minutes, so as to make the H content in the molten steel ≤2ppm. After vacuum degassing, the time of soft blowing is ≥25 minutes, so as to promote the inclusions in the molten steel to fully float up. All the raw materials of smelting are choosing high-quality molten iron, scrap steel, and raw and auxiliary materials. Besides, high-quality refractory materials are used, low-titanium / low-calcium alloy(s) is(are) used. High-performance refining synthetic slag is used for smelting. Thereby, the numbers and the forms of various inclusions in steel are controlled. A long-term process of inclusion removal is maintained in the ladle, so as to make non-metallic inclusions fully float up. A slag specially used for refining and a slag for protecting tundish are selected to absorb inclusions.

In step (2), the continuous casting uses induction heating of the tundish, soft reduction and electromagnetic stirring, which effectively reduce the segregation and improve material structure of the bloom. The continuous casting adopts low superheat pouring, the superheat of continuous casting is controlled at ≤25°C, and the speed of continuous casting is controlled at 0.40-0.50 m/min, which effectively improves the uniformity of the material. By continuous casting, it finally obtain a continuous casting bloom with a chemical composition consistent with the final steel product.

Compared with the prior art, the production method of carburized bearing steel of the present invention has the following characteristics:
1. A production process with vacuum degassing and continuous casting is adopted. Compared with the electroslag remelting technology, the present invention greatly shortens the production cycle, improves the production efficiency, effectively reduces the manufacturing costs, realizes large-scale production, and is conducive to improving the stability of material composition and product quality.
2. Al deoxidation technology and vacuum degassing are used, so as to reduce the content of O and the content of H in the steel to a extremely low level, which effectively controls the number and the size of inclusions. After testing, the number and the size of inclusions in the product of the present invention have reached the world's leading level.
3. Continuous casting uses low superheat pouring, and uses induction heating of tundish, soft reduction and electromagnetic stirring technology, so as to effectively reduce the segregation of the bloom and to improve the material structure; a large section pouring is used under protection of the full process, so as to ensure the density of the material.
4. Casting of blooms with large cross-section is combined with non-uniform temperature rolling, and is combined with a large reduction in initial rolling, it can significantly refine and homogenize the matrix structure in steel, so as to improve isotropy in the structure.
5. The continuous casting bloom and the intermediate bloom are subjected to slow cooling treatment in a pit, so as to avoid cracking of the steel which is caused by surface/ internal thermal stress and change of structural stress.

The carburized bearing steel for large-load rolling mill bearings produced by the present invention meets the following index requirements: type B fine inclusions ≤ Grade 1.5, Type B coarse inclusions ≤ Grade 1.0, Type D fine inclusions ≤ Grade 1.0, Type D coarse inclusions ≤ Grade 1.0, Type DS inclusions ≤ Grade 1.0. Macro defects are detected by etching test of tower sample, wherein hairline is not allowed to exist. The structure of steel under low magnification is graded according to GB/T 1979, and it meets central porosity ≤1.0, general porosity ≤1.0, ingot segregation ≤1.0, central segregation ≤1.0, besides, shrinkage cavities, cracks and subcutaneous bubbles are not allowed.

In the present invention, the metallographic structure of the steel is required to be a uniform and fine bainite structure, wherein the grain size G is required to be ≥5. In the present invention, the mechanical properties of the steel are as follows: the tensile strength is required to be ≥ 1180 MPa, the impact performance AKU is required to be ≥ 63 J, the elongation after fracture is ≥ 10%, and the section shrinkage is ≥ 45%. In order to ensure the cold processing performance of the steel, the hardness is required to be ≤ 241 HBW.

### Description of Drawings

Figure 1 is a (100×) magnified image of typical metallographic structure of the carburized bearing steel in the embodiment of the present invention;
Figure 2 is a (500×) magnified image of typical metallographic structure of the carburized bearing steel in the embodiment of the present invention;
Figure 3 is a (100×) magnified image of typical metallographic structure of the electroslag steel in the comparative example;
Figure 4 is a (500×) magnified image of typical metallographic structure of the electroslag steel in the comparative example.

### Detailed Embodiments

The present invention is further described in detail below in conjunction with the accompanying drawings. The embodiments are exemplary and intended to be used to explain the present invention, but should not be understood as limiting the present invention.

The manufacturing process of carburized bearing steel for large-load rolling mill bearings in an embodiment of the present invention is to produce steel using a forming process, including: pretreatment of molten iron + top and bottom blowing converter BOF (high-power electric arc furnace EAF) - ladle refining furnace LF - vacuum degassing furnace RH (VD furnace) - large-section continuous casting CCM to produce large continuous casting bloom - slow cooling - heating and rolling into intermediate bloom - slow cooling - heating and rolling into product - slow cooling, annealing - finishing. The continuous casting bloom has a specification of 300mm×400mm, the finished steel has a specification ofϕ50mm-Φ130mm, and the compression ratio is ≥4.

To be specific, high-quality molten iron, scrap steel and raw and auxiliary materials are used during smelting, and high-quality deoxidizers and refractory materials are used. In the electric furnace/converter production process, the end-point C content for tapping of the three embodiments is controlled at 0.08-0.15%, the end-point P content is controlled at ≤0.020%, the temperature of tapping is 1620°C-1700°C. Iron containing Al is added during the tapping process for pre-deoxidation. After tapping, slag is removed and a synthetic slag is added again. In the continuous casting, the superheat is controlled within ≤25°C, and the speed of continuous casting is controlled at 0.40-0.50m/min. The produced continuous casting bloom is slowly cooled in the pit, wherein the temperature of entering the pit is greater than 650°C, the time of slow cooling in the pit is greater than 48 hours, and the temperature of leaving the pit is less than 300°C. After the slow cooling is completed, the continuous casting bloom is sent to a heating furnace in a neutral or weakly oxidizing atmosphere for heating, and is rolled into an intermediate bloom. The intermediate bloom is slowly cooled in a pit. The temperature of entering the pit is ≥600°C, the temperature of leaving the pit is ≤300°C, and the time of slow cooling is ≥60h. After slow cooling, the intermediate bloom is taken out of the pit, and is rolled into a bar. After rolling, the bar is slowly cooled down. Within 24 hours after the bar is moved out of the pit, the bar is subjected to stress relief annealing; the temperature of stress relief annealing is 650-750°C, and the holding time is ≥5h. Then it is cooled to 400°C in the furnace, and then taken out of the furnace, and cooled in air to room temperature. The bar is then subjected to subsequent finishing process, flaw detection, etc.

The chemical compositions (wt%) of the examples of the present invention and those G20Cr2Ni4 produced by electroslag remelting and currently used in the market (as a comparison) are shown in Table 2.

**Table 2**

| | Example | C | Si | Mn | P | S | Cr | Cu | Ni | Al |
|---|---|---|---|---|---|---|---|---|---|---|
| The present invention | 1 | 0.21 | 0.26 | 0.47 | 0.011 | 0.002 | 1.45 | 0.01 | 3.4 | 0.014 |
| The present invention | 2 | 0.20 | 0.29 | 0.45 | 0.012 | 0.003 | 1.45 | 0.02 | 3.47 | 0.029 |
| The present invention | 3 | 0.21 | 0.28 | 0.49 | 0.014 | 0.002 | 1.47 | 0.01 | 3.45 | 0.026 |
| Comparative steel | | 0.20 | 0.24 | 0.45 | 0.018 | 0.006 | 1.48 | 0.02 | 3.45 | 0.035 |

**Table 2**

| | Exam -ple | Mo | As | Sn | Pb | Nb | Ca | V | Ti | O |
|---|---|---|---|---|---|---|---|---|---|---|
| The present invention | 1 | 0.01 | 0.0016 | 0.0010 | 0.0016 | 0.07 | 0.0003 | 0.09 | 0.0014 | 0.00074 |
| The present invention | 2 | 0.01 | 0.0011 | 0.0025 | 0.002 | 0.08 | 0.0006 | 0.10 | 0.0013 | 0.00052 |
| The present invention | 3 | 0.02 | 0.0017 | 0.0017 | 0.0023 | 0.09 | 0.0005 | 0.08 | 0.0011 | 0.00062 |
| Compara -tive steel | | 0.02 | 0.0045 | 0.0012 | 0.001 | 0.0021 | 0.0008 | 0.008 | 0.0035 | 0.00176 |

From the perspective of composition, the main difference between the present invention and the electroslag steel is that the present invention adds trace amounts of alloy elements Nb and V; in addition, due to the use of vacuum degassing + continuous casting process, the control to the contents of harmful elements like oxygen and titanium is significantly better than that of electroslag steel.

**Table 3 Detection of non-metallic inclusions for each example and comparative electroslag**

| | Example | A fine Inclusion | A thick Inclusion | B fine inclusion | B thick inclusion | C fine inclusion | C thick inclusion | D fine inclusion | D thick inclusion | Ds inclusion |
|---|---|---|---|---|---|---|---|---|---|---|
| The present invention | 1 | 0.5 | 0 | 0-0.5 | 0-0.5 | 0 | 0 | 0.5 | 0-0.5 | 0-0.5 |
| The present invention | 2 | 0.5 | 0 | 0-1.0 | 0-0.5 | 0 | 0 | 0.5 | 0 | 0 |
| The present invention | 3 | 0.5 | 0 | 0-0.5 | 0 | 0 | 0 | 0-1.0 | 0 | 0-1.0 |
| Comparative steel | | 0.5 | 0 | 0-1.0 | 0-0.5 | 0 | 0 | 0.5-1 | 0-0.5 | 0-1.5 |

From the results of non-metal inclusion detection, the present invention have slightly better indexes than the electroslag steel.

**Table 4 Grain size, hardness and mechanical properties of each example**

| | Grain size G | Hardness (HBW) | Tensile strength (MPa) | Elongation after fracture | Section shrinkage | Impact toughness AKU (J) |
|---|---|---|---|---|---|---|
| Example 1 | 7.5 | 207 | 1512 | 13% | 55% | 98 |
| Example 2 | 7 | 212 | 1568 | 12% | 58% | 96 |
| Example 3 | 7.5 | 206 | 1532 | 13% | 57% | 102 |
| Comparative steel | 6.5 | 201 | 1412 | 11% | 52% | 79 |

From the perspective of mechanical properties, the present invention adds a small amount of alloy elements Nb and V, the grain size is finer than that of electroslag steel, and the indexes of strength and impact toughness are significantly better than those of electroslag steel.

**Table 5 Low-magnification data of steel in each example**

| | Central porosity | General porosity | Ingot segregation | Central segregation | Cracks | Shrinkage cavities | Subcutaneous bubbles |
|---|---|---|---|---|---|---|---|
| The present invention Example 1 | 1 | 1.0 | 1.0 | 1.0 | no | no | no |
| The present invention Example 2 | 1 | 1.0 | 1.0 | 1.0 | no | no | no |
| The present invention Example 3 | 1 | 1.0 | 1.0 | 1.0 | no | no | no |
| Comparative steel | 1 | 1.0 | 1.0 | 1.0 | no | no | no |

From the low-magnification inspection, the indexes of the present invention are similar to those of the electroslag steel.

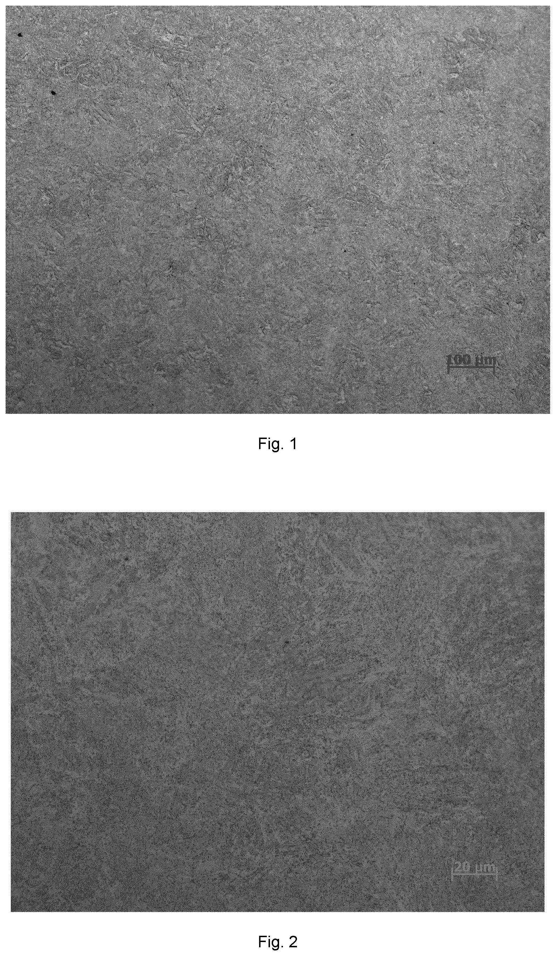

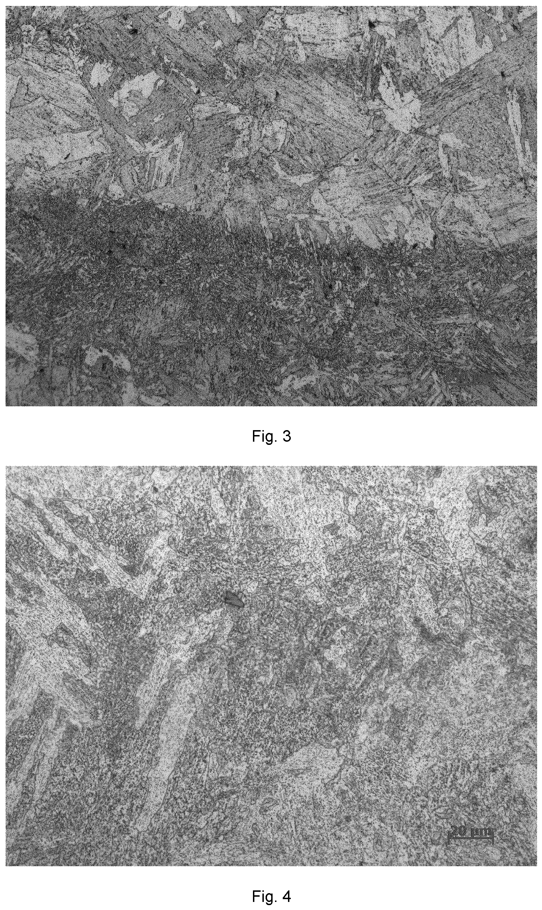

Figures 1 and 2 are typical metallographic structure images of the Examples of the present invention, and Figures 3 and 4 are typical metallographic structure images of the comparative example. The microstructure of the comparative electroslag steel is coarse and uneven bainite, while that of the working examples is fine and uniform bainite. The microstructure of the present invention is more fin and uniform than that of the electroslag steel. Firstly, it is because that the addition of Nb element in the steel refines the grains of the steel. Secondly, casting of blooms with large cross-section is combined with non-uniform temperature rolling, and is combined with a large reduction in initial rolling, it can significantly refine and homogenize the matrix structure in steel.

From the comparisons in Tables 2, 3, 4, 5 and in the metallographic structure images, it can be seen that compared with the G20Cr2Ni4 steel produced by electroslag remelting, the carburized bearing steel for large-load rolling mill bearings in each example of the present invention has the following advantages :
1. By using vacuum degassing + continuous casting process, some indexes regarding the harmful elements O, Ti, etc., are significantly better than those of electroslag steel. It is also a traditional advantage of vacuum degassing + continuous casting process, compared with electroslag process.
2. From the results of non-metallic inclusions and low-magnification inspection, it can be seen that due to the careful selection of raw and auxiliary materials for smelting and the optimization of smelting processing technology, the index of non-metallic inclusions in the present invention is not worse than that of electroslag steel. Besides, due to the addition of Nb elements which refines the grains during the production process, and due to the use of initial rolling with large reduction combined with non-uniform temperature rolling technology during the rolling process, the quality of the steel in low magnification is not worse than that of electroslag steel, and the bainite structure of the steel is finer, smaller and more uniform than that of electroslag steel.
3. From the comparison results of mechanical properties, it can be seen that in the present invention, since the structure is finer, smaller and more uniform, and a trace amount of V element is added, the impact and tensile mechanical properties are obviously better than the performance of electroslag steel, which is more conducive to improving the service life of the rolling mill bearing.

In the present invention, the technical performances of the steel fully meet the technical requirements of medium- / high-quality steel in the current GB/T 3203 , and the technical performances are not worse than those of electroslag steel.

In summary, the present invention relates to a carburized bearing steel for large-load rolling mill bearings and a production method thereof. Microalloying elements are added to the steel; a high-efficiency, high-capacity, low-cost process route, including vacuum degassing, continuous casting, and rolling, is used; key processes are optimized and controlled; so that the steel has high purity, high structural uniformity, and high density. Thus, the present invention can completely replace the previous electroslag remelting process. It is more competitive in production efficiency, production cost, and product-quality stability.

## Claims

1. A carburized bearing steel, **characterized in that** the chemical composition by mass percentage is: 0.17-0.23, Si: 0.15-0.40, Mn: 0.30-0.60, Cr: 1.25-1.75, Mo: ≤0.08, Ni: 3.25-3.75, Al: 0.01-0.05, P≤0.020, S≤0.015, Cu≤0.20, Nb: 0.05-0.09, V: 0.07-0.13, Ca≤0.0010, Ti≤0.0015, O≤0.0008, and the balance is Fe and unavoidable impurities.

2. The carburized bearing steel according to claim 1, **characterized in that** the metallographic structure of the steel is bainite and the grain size G is ≥ 5.

3. The carburized bearing steel according to claim 1, **characterized in that** when microscopic brittle inclusions of the steel are tested according to GB/T 10561 A method, test results meet that Type B fine inclusions ≤ Grade 1.5, Type B coarse inclusions ≤ Grade 1.0, Type D fine inclusions ≤ Grade 1.0, Type D coarse inclusions ≤ Grade 1.0, Type DS inclusions ≤ Grade 1.0; when macro defects are detected by etching test of tower sample, no hairline exists.

4. The carburized bearing steel according to claim 1, **characterized in that** the structure of steel under low magnification is graded according to GB/T 1979, and it meets that central porosity ≤1.0, general porosity ≤1.0, ingot segregation ≤1.0, central segregation ≤1.0; besides, shrinkage cavities, cracks and subcutaneous bubbles are not allowed.

5. The carburized bearing steel according to claim 1, **characterized in that** tensile strength ≥ 1180 MPa, impact performance AKU ≥ 63 J, elongation after fracture ≥10%, section shrinkage ≥45%; hardness ≤ 241 HBW, and depth of decarburization ≤ 0.8% D, wherein D is the diameter of round steel.

6. A method for producing carburized bearing steel, **characterized in** comprising following steps:
(1) smelting of molten steel: according to the chemical composition, molten steel is smelted, wherein the smelting process includes vacuum degassing of the molten steel;
(2) continuous casting: using continuous casting process to cast molten steel into a continuous casting bloom;
(3) slow cooling of continuous casting bloom: slow cooling of continuous casting bloom is to slowly cool the continuous casting bloom in a pit, wherein the temperature of entering the pit is greater than 650°C, the time of slow cooling in the pit is greater than 48 hours, and the temperature of leaving the pit is less than 300°C;
(4) initial rolling: the continuous casting bloom is heated in a furnace to make structure fully diffuse; after being moved out of the furnace, the continuous casting bloom is descaled with high-pressure water, so as to remove iron oxide scales on the surface of the continuous casting bloom and to reduce the surface temperature of the continuous casting bloom so that the surface temperature of the bloom is 100-200°C lower than the core temperature; starting rolling when the surface temperature of the continuous casting bloom is 1020-1100°C, at this time, the core temperature of the continuous casting bloom is 1180-1250°C, as as to achieve a rolling at non-uniform temperatures;
the initial rolling uses multiple-pass rolling, in which a small-reduction rolling with a deformation ≤ 10% and a large-reduction rolling with a deformation ≥ 15% are performed alternately, so as perform rolling alternately on wide face and narrow face of the continuous casting bloom, wherein different rolling reductions are performed on the wide face and the narrow face of the continuous casting bloom respectively, and for rolling passes, each of the wide face and the narrow face is subjected to at least one large-reduction rolling pass and at least one small-reduction rolling pass;
(5) slowly cooling the intermediate bloom and rolling into a product: slowly cooling the intermediate bloom; after the slow cooling, the intermediate bloom is sent to a heating furnace again, to be heated to 1200°C-1250°C, the holding time ≥3h, the start rolling temperature is 1050°C-1130°C, the final rolling temperature is ≥950°C, finally it is rolled into a round steel of a target size;
(6) slowly cooling the rolled product and annealing: the rolled steel is slowly cooled; within 24 hours after slow cooling, stress relief annealing is performed;
(7) finishing: The steel is subjected to straightening and flaw detection.

7. The method of claim 6, **characterized in that** in step (2), the size of the continuous casting bloom is greater than 300mm×400mm, the compression ratio of continuous casting bloom to the final steel is greater than 4, and the final steel is a round steel having a specification of ϕ50mm-Φ130mm.

8. The method of claim 6, **characterized in that** in step (4), the continuous casting bloom is heated to 1210°C-1260°C in a neutral or weakly oxidizing atmosphere, wherein the holding time of the heating is ≥ 10 h,
the initial rolling includes 7 passes in total, in the first pass, the wide face of the continuous casting bloom is pressed down by a deformation of 9.7% ; the bloom is turned 90°; in the second pass, pressed down by a deformation of 15.4%; in the third pass, pressed down by a deformation of 3.6%; then the bloom is turned 90° again; in the fourth pass, pressed down by a deformation of 23%; in the fifth pass, pressed down by a deformation of 5%; and then the bloom is turned 90° again, in the sixth pass, pressed down by a deformation of 18.8%; in the seventh pass, pressed down by a deformation of about 4.3%, and finally an intermediate bloom of 200 mm × 200 mm is formed; 200 mm is cut off at each of both ends of the intermediate bloom.

9. The method of claim 6, **characterized in that** in step (5), the intermediate bloom after initial rolling is slowly cooled in a pit, with temperature of entering the pit ≥600°C, the temperature of leaving the pit ≤300°C, and the time of slow cooling ≥60h; within 24 hours after leaving the pit, the intermediate bloom is sent to a heating furnace again.

10. The method of claim 6, **characterized in that** in step (6), the rolled steel is slowly cooled, wherein the temperature of entering the pit is ≥450°C; the temperature of stress relief annealing is 650-750°C, the holding time is ≥5h; and then it is cooled to 400°C in the furnace, and then taken out of the furnace, and cooled in air to room temperature.

11. The method of claim 6, **characterized in that** in step (1), the raw materials in smelting are sequentially subjected to KR pretreatment of molten iron, electric furnace or converter smelting, LF refining, RH or VD vacuum degassing, so as to obtain pure molten steel that meets the chemical composition; wherein for steel tapping of the electric furnace or converter, the end-point carbon carbon is controlled at 0.08-0.15%, end-point phosphorus content is controlled at ≤0.20%, and the tapping temperature is between 1620-1700°C; iron containing Al is added during the tapping process for pre-deoxidation; after tapping, slag is removed and a synthetic slag is added again; in LF refining, it performs heating, alloying and deoxidation, so as to control the aluminum content in the range of from 0.02% to 0.04%; the deoxidation uses a diffusion deoxidation on slag surface; alloy is added in the early stage of refining, so as to achieve the wanted alloy content; the whole time of LF smelting is ≥1 hour; stirring with argon is performed throughout the whole process of vacuum degassing, and the vacuum is maintained at/under 100Pa for ≥20 minutes, so as to make the H content in the molten steel ≤2ppm; after vacuum degassing, the time of soft blowing is ≥25 minutes, so as to promote the inclusions in the molten steel to fully float up.

12. The method of claim 6, **characterized in that** in the continuous casting of step (2), the superheat is controlled to be ≤25°C, and the speed of continuous casting is controlled at 0.40-0.50m/min.
